# EUROPEAN PATENT APPLICATION

(11) **EP 4 603 536 A1**
(43) Date of publication of application: **20.08.2025**
(21) Application number: 23888624.6
(22) Date of filing: 02.11.2023
(51) Int. Cl.: C08L 11/00, C08K 3/22, C08K 3/36, C08K 5/46, C08K 5/54, C08K 5/544

(54) **RUBBER COMPOSITION, VULCANIZED PRODUCT, AND VULCANIZED MOLDED BODY**

(30) Priority: 09.11.2022 JP 2022179546
(71) Applicant: Denka Company Limited, Tokyo 103-8338 (JP)
(72) Inventor: SAKAI, Yuki, Tokyo 103-8338 (JP); IKARI, Satoru, Tokyo 103-8338 (JP)
(74) Representative: Gulde & Partner
(86) International application number: PCT/JP2023/039699
(87) International publication number: WO 2024/101276

(57) **Abstract**

Provided is a rubber composition capable of providing a vulcanized product and a vulcanized molded body excellent in abrasion resistance. According to the present invention, there is provided a rubber composition comprising a chloroprene-based rubber, silica, a silane coupling agent, and a hydrate, wherein the rubber composition comprises 5 to 80 parts by mass of the silica and 0.5 parts by mass or more and less than 20 parts by mass of the hydrate, with respect to 100 parts by mass of the chloroprene-based rubber; the rubber composition comprises 0.5 to 15 parts by mass of the silane coupling agent with respect to 100 parts by mass of the silica; and the rubber composition satisfies at least one of the following conditions i) and ii),
condition i)
the rubber composition comprises 3-methyl-thiazolidine-2-thione, and the rubber composition comprises 0.1 to 3.0 parts by mass of the 3-methyl-thiazolidine-2-thione with respect to 100 parts by mass of the chloroprene-based rubber;
condition ii)
the rubber composition comprises a compound A and a compound B;
the compound A is at least one selected from a group consisting of a thiourea-based compound, 3-methyl-thiazolidine-2-thione, and di(5-mercapto-1,3,4-thiadiazol-2-yl) disulfide;
the compound B is at least one selected from a group consisting of a thiuram-based compound, a sulfenamide-based compound, a thiazole-based compound, a guanidine-based compound, a benzimidazole-based compound, N-phenyl-N-(trichloromethylthio)benzenesulfonamide, and a diazabicycloundecene-based compound; and
the rubber composition comprises 0.1 to 3.0 parts by mass of the compound A and 0.01 to 3.0 parts by mass of the compound B with respect to 100 parts by mass of the chloroprene-based rubber.

## Description

### TECHNICAL FIELD

Chloroprene-based rubber is excellent in mechanical properties, ozone resistance, and chemical resistance, and taking advantage of these properties, is used in a wide range of fields such as automotive parts, adhesives, and various industrial rubber parts. In addition, in recent years, performance required for rubber parts has become remarkably high, and for example, further improvement in abrasion resistance is demanded.

### BACKGROUND ART

Patent Literature 1 discloses a composition for chloroprene-based vulcanized rubber comprising 100 parts by mass of a polymer for chloroprene-based vulcanized rubber, 0.5 to 6 parts by mass of an acid acceptor, 0.2 to 3 parts by mass of a lubricant, 1 to 5 parts by mass of an antioxidant, 10 to 120 parts by mass of carbon black, 0.1 to 20 parts by mass of a filler other than carbon black, 2 to 40 parts by mass of a softener, 0.2 to 5 parts by mass of a processing aid, 0.5 to 10 parts by mass of a metal oxide, and 0.5 to 5 parts by mass of a vulcanization accelerator, wherein the polymer is a copolymer consisting of 80 to 97% by mass of 2-chloro-1,3-butadiene (chloroprene) (C-1) and 20 to 3% by mass of 2,3-dichloro-1,3-butadiene (C-2), or a copolymer consisting of 79.8 to 96.8% by mass of 2-chloro-1,3-butadiene (chloroprene) (C-1), 20 to 3% by mass of 2,3-dichloro-1,3-butadiene (C-2), and 0.2 to 17% by mass of a monomer (C-3) copolymerizable therewith, based on 100% by mass of the total amount of all monomers, and the Mooney viscosity (ML1+4(100°C)) of the polymer is in the range of 100 to 135.

In addition, Patent Literature 2 discloses a rubber composition for flame-retardant hoses, comprising a rubber component, carbon black, and silica, wherein the rubber component is only chloroprene rubber, or only chloroprene rubber and styrenebutadiene rubber.

### CITATION LIST

### PATENT LITERATURE

Patent Literature 1: JP-A-2012-211345
Patent Literature 2: JP-A-2017-019947

### SUMMARY OF INVENTION

### TECHNICAL PROBLEM

However, with conventional chloroprene-based rubber compositions, there has been room for improvement in the abrasion resistance of the resulting vulcanized product and vulcanized molded body. The present invention has been made in view of such circumstances, and aims to provide a rubber composition that can provide a vulcanized product and a vulcanized molded body excellent in abrasion resistance.

### SOLUTION TO PROBLEM

According to the present invention, there is provided a rubber composition comprising a chloroprene-based rubber, silica, a silane coupling agent, and a hydrate, wherein:
the rubber composition comprises 5 to 80 parts by mass of the silica and 0.5 parts by mass or more and less than 20 parts by mass of the hydrate, with respect to 100 parts by mass of the chloroprene-based rubber;
the rubber composition comprises 0.5 to 15 parts by mass of the silane coupling agent with respect to 100 parts by mass of the silica; and
the rubber composition satisfies at least one of the following conditions i) and ii)
   condition i)
      the rubber composition comprises 3-methyl-thiazolidine-2-thione, wherein the rubber composition comprises 0.1 to 3.0 parts by mass of the 3-methyl-thiazolidine-2-thione with respect to 100 parts by mass of the chloroprene-based rubber;
   condition ii)
      the rubber composition comprises a compound A and a compound B,
      the compound A is at least one selected from a group consisting of a thiourea-based compound, 3-methyl-thiazolidine-2-thione, and di(5-mercapto-1,3,4-thiadiazol-2-yl) disulfide;
      the compound B is at least one selected from a group consisting of a thiuram-based compound, a sulfenamide-based compound, a thiazole-based compound, a guanidine-based compound, a benzimidazole-based compound, N-phenyl-N-(trichloromethylthio) benzenesulfonamide, and a diazabicycloundecene-based compound; and
      the rubber composition comprises 0.1 to 3.0 parts by mass of the compound A and 0.01 to 3.0 parts by mass of the compound B with respect to 100 parts by mass of the chloroprene-based rubber.

Conventionally, in a rubber composition containing a chloroprene-based rubber, when silica as a filler and a vulcanization accelerator that supplies sulfur as a crosslinking agent were used in combination, vulcanization sometimes did not proceed sufficiently. Here, the reason why vulcanization does not proceed sufficiently when silica and a vulcanization accelerator are combined is presumed to be because the silica surface is covered with silanol groups and is acidic, and because the vulcanization accelerator is adsorbed onto the silica surface, thereby inhibiting vulcanization. As a result of diligent studies, the present inventors found that in a chloroprene-based rubber composition containing silica, by using a specific compound in a certain amount, and/or by using a specific compound A in combination with a specific compound B in a certain amount, vulcanization can proceed sufficiently, leading to a rubber composition capable of providing a vulcanized product and a vulcanized molded body excellent in abrasion resistance, and completed the present invention.

Various embodiments of the present invention are illustrated below. The embodiments shown below can be combined with each other.
[1] A rubber composition comprising a chloroprene-based rubber, silica, a silane coupling agent, and a hydrate,
   wherein:
   the rubber composition comprises 5 to 80 parts by mass of the silica and 0.5 parts by mass or more and less than 20 parts by mass of the hydrate, with respect to 100 parts by mass of the chloroprene-based rubber;
   the rubber composition comprises 0.5 to 15 parts by mass of the silane coupling agent with respect to 100 parts by mass of the silica; and
   the rubber composition satisfies at least one of the following conditions i) and ii):
      condition i)
         the rubber composition comprises 3-methyl-thiazolidine-2-thione, and the rubber composition comprises 0.1 to 3.0 parts by mass of 3-methyl-thiazolidine-2-thione with respect to 100 parts by mass of the chloroprene-based rubber;
      condition ii)
         the rubber composition comprises a compound A and a compound B;
         the compound A is at least one selected from a group consisting of a thiourea-based compound, 3-methyl-thiazolidine-2-thione, and di(5-mercapto-1,3,4-thiadiazol-2-yl) disulfide;
         the compound B is at least one selected from a group consisting of a thiuram-based compound, a sulfenamide-based compound, a thiazole-based compound, a guanidine-based compound, a benzimidazole-based compound, N-phenyl-N-(trichloromethylthio)benzenesulfonamide, and a diazabicycloundecene-based compound; and
         the rubber composition comprises 0.1 to 3.0 parts by mass of the compound A and 0.01 to 3.0 parts by mass of the compound B with respect to 100 parts by mass of the chloroprene-based rubber.
[2] The rubber composition of [1], wherein the chloroprene-based rubber contains an unsaturated nitrile monomer unit.
[3] The rubber composition of [1] or [2] wherein the silane coupling agent is a silane coupling agent having an amino group in its structure.
[4] The rubber composition of any one of [1] to [3], wherein the hydrate is a hydrate that releases H₂O in a temperature range of 100°C to 250°C.
[5] The rubber composition of any one of [1] to [4], wherein the hydrate is at least one selected from a group consisting of a hydrotalcite compound represented by a following formula (1), a hydrous salt, and a metal hydroxide;

   [M²⁺₁₋ₓM³⁺ₓ(OH)₂]^{×+}[Aⁿ⁻_{x/n}·mH₂O]^{×-} (1)

   wherein, in the formula (1), M²⁺ is at least one divalent metal ion selected from a group consisting of Mg²⁺, Mn²⁺, Fe²⁺, Co²⁺, Ni²⁺, Cu²⁺, Zn²⁺;
   M³⁺ is at least one trivalent metal ion selected from a group consisting of Al³⁺, Fe³⁺, Cr³⁺, Co³⁺, In³⁺
   Aⁿ⁻ is at least one n-valent anion selected from a group consisting of OH⁻, F⁻, Cl⁻, Br⁻, NO3⁻, CO3²⁻, SO4²⁻, Fe(CN)6³⁻, CH₃COO⁻ ; and
   X satisfies 0 < X ≤ 0.33.
[6] The rubber composition of [5], wherein the hydrate is at least one hydrotalcite compound selected from a group consisting of Mg_{4.3}Al₂(OH)_{12.6}CO₃ · 3.5H₂O, Mg₃ZnAl₂(OH)₁₂CO₃ · 3H₂O, Mg_{4.5}Al₂(OH)₁₃CO₃ · 3.5H₂O, Mg_{4.5}Al₂(OH)₁₃CO₃, Mg₄Al₂(OH)₁₂CO₃ · 3.5H₂O, Mg₆Al₂(OH)₁₆CO₃ · 4H₂O, Mg₅Al₂(OH)₁₄CO₃ · 4H₂O, Mg₃Al₂(OH)₁₀CO₃·1.7H₂O.
[7] The rubber composition of any one of [1] to [6], wherein the silica has a BET specific surface area of 50 to 300 m²/g.
[8] The rubber composition of any one of [1] to [7], wherein:
   the rubber composition comprises the compound A and the compound B; and
   the rubber composition comprises 10 to 100 parts by mass of the compound B with respect to 100 parts by mass of the compound A.
[9] A rubber composition comprising a chloroprene-based rubber, silica, a silane coupling agent, and a hydrate, wherein when the rubber composition is press-vulcanized under conditions of 160°C for 40 minutes to obtain a vulcanized molded body, an abrasion volume ΔV of the vulcanized molded body in an Akron abrasion resistance test according to JIS K 6264-2 at 1000 rotations is 50 mm³ or less.
[10] The rubber composition of [9], wherein the vulcanized molded body has a durometer hardness type A defined in JIS K 6253 of 30 to 90.
[11] The rubber composition of [9] or [10], wherein:
   the rubber composition comprises 5 to 80 parts by mass of the silica and 0.5 parts by mass or more and less than 20 parts by mass of the hydrate, with respect to 100 parts by mass of the chloroprene-based rubber; and
   the rubber composition comprises 0.5 to 15 parts by mass of the silane coupling agent with respect to 100 parts by mass of the silica.
[12] The rubber composition of any one of [9] to [11],
   wherein the rubber composition comprises at least one of 3-methyl-thiazolidine-2-thione, a compound A, and a compound B;
   the compound A is at least one selected from a group consisting of a thiourea-based compound, 3-methyl-thiazolidine-2-thione, and di(5-mercapto-1,3,4-thiadiazol-2-yl) disulfide, and the compound B is at least one selected from a group consisting of a thiuram-based compound, a sulfenamide-based compound, a thiazole-based compound, a guanidine-based compound, a benzimidazole-based compound, N-phenyl-N-(trichloromethylthio) benzenesulfonamide, and a diazabicycloundecene-based compound.
[13] A vulcanized product of the rubber composition of any one of [1] to [12].
[14] A vulcanized molded body of the rubber composition of any one of [1] to [12].

### ADVANTAGEOUS EFFECTS OF INVENTION

According to the rubber composition related to the present invention, a vulcanized product and a vulcanized molded body having excellent abrasion resistance can be obtained. Furthermore, the obtained vulcanized product and vulcanized molded body, taking advantage of their properties, can be suitably used, for example, as materials for power transmission belts and conveyor belts for general industry, automotive air springs, anti-vibration rubbers, hoses, wipers, dipped products, sealing parts, adhesives, boots, rubberized fabrics, rubber rolls, and the like. The vulcanized product and vulcanized molded body according to one embodiment of the present invention can be used, in particular, as members for which abrasion resistance is required. As one example, the vulcanized product and vulcanized molded body according to one embodiment of the present invention can be suitably used as rubber rolls, for which abrasion resistance is required, for example, rubber rolls for embossing.

### DESCRIPTION OF EMBODIMENTS

The present invention will be described in detail below by illustrating the embodiments of the present invention. The present invention is not limited by these descriptions. The features of the embodiments of the present invention described below can be combined with each other. In addition, each feature can be an invention independently.

### <First Aspect>

### 1. Rubber Composition

The rubber composition according to the present invention comprises a chloroprene-based rubber, silica, a silane coupling agent, and a hydrate, and further comprises 3-methyl-thiazolidine-2-thione, and/or a compound A and a compound B.

### 1.1 Chloroprene-based Rubber

The chloroprene-based rubber according to the present invention refers to a rubber comprising a chloroprene-based polymer having chloroprene (2-chloro-1,3-butadiene) as a monomer unit (a monomer unit means a structural unit). Examples of the chloroprene-based polymer include a homopolymer of chloroprene, a copolymer of chloroprene (a copolymer of chloroprene and a monomer copolymerizable with chloroprene), and the like. The polymer structure of the chloroprene-based polymer is not particularly limited.

Commercially available 2-chloro-1,3-butadiene may contain a small amount of 1-chloro-1,3-butadiene as an impurity. 2-chloro-1,3-butadiene containing such a small amount of 1-chloro-1,3-butadiene can also be used as the chloroprene monomer of the present embodiment.

The chloroprene-based rubber according to one embodiment of the present invention preferably contains an unsaturated nitrile monomer unit. In the chloroprene-based rubber according to one embodiment of the present invention, when the rubber is taken as 100% by mass, the content rate of the unsaturated nitrile monomer unit is preferably 25% by mass or less, more preferably less than 25% by mass, and even more preferably 1% by mass or more and less than 25% by mass. The content rate of the unsaturated nitrile monomer unit in the chloroprene-based rubber according to one embodiment of the present invention is, for example, 0, 1, 2, 3, 4, 5, 6, 7, 8, 9, 10, 11, 12, 13, 14, 15, 16, 17, 18, 19, 20, 21, 22, 23, 24% by mass, less than 25% by mass, or 25% by mass or less, and may be within a range between any two of the numerical values exemplified here. By setting the content rate of the unsaturated nitrile monomer unit in the rubber composition to 25% by mass or less, the water resistance and cold resistance of the vulcanized product and vulcanized molded body of the rubber composition are further improved. Furthermore, by setting the content rate of the unsaturated nitrile monomer unit to 1% by mass or more, the resulting rubber composition has sufficient oil resistance.

Examples of the unsaturated nitrile include acrylonitrile, methacrylonitrile, ethacrylonitrile, phenylacrylonitrile, and the like. The unsaturated nitrile can be used alone or in combination of two or more. The unsaturated nitrile preferably comprises acrylonitrile from the viewpoints of easily obtaining excellent moldability, and easily obtaining excellent tensile strength at break, elongation at break, hardness, tear strength, and oil resistance in the vulcanized molded body.

The content of the unsaturated nitrile monomer unit contained in the chloroprene-based rubber can be calculated from the content of nitrogen atoms in the chloroprene-based rubber. Specifically, using an elemental analyzer (SUMIGRAPH 220F: manufactured by Sumika Chemical Analysis Service, Ltd.), the content of nitrogen atoms in 100 mg of the chloroprene-based rubber is measured, and the content of structural units derived from the unsaturated nitrile monomer can be calculated. The elemental analysis measurement can be performed under the following conditions. For example, set the electric furnace temperature to a reaction furnace of 900°C, a reduction furnace of 600°C, a column temperature of 70°C, and a detector temperature of 100°C, flow oxygen as a combustion gas at 0.2 mL/min, and helium as a carrier gas at 80 mL/min. A calibration curve can be created using aspartic acid (10.52%) with a known nitrogen content as a standard substance.

The chloroprene-based rubber according to one embodiment of the present invention preferably comprises 60 to 100% by mass of chloroprene monomer units when the rubber is taken as 100% by mass. The content rate of the chloroprene monomer units in the rubber is, for example, 60, 65, 70, 75, 80, 85, 90, 95, 99, or 100% by mass, and may be within a range between any two of the numerical values exemplified here. By setting the content rate of the chloroprene monomer units within the above numerical range, it is possible to obtain a rubber composition that can provide a molded body excellent in the balance of hardness, tensile strength, and cold resistance.

The chloroprene-based rubber according to one embodiment of the present invention, can also have a monomer unit other than the chloroprene monomer and the unsaturated nitrile monomer. Examples of the monomer unit other than the chloroprene monomer and the unsaturated nitrile monomer are not particularly limited as long as they are copolymerizable with the chloroprene monomer, or the chloroprene monomer and the unsaturated nitrile monomer, but include esters of (meth)acrylic acid such as methyl (meth)acrylate, butyl (meth)acrylate, 2-ethylhexyl (meth)acrylate); hydroxyalkyl (meth)acrylates such as 2-hydroxymethyl (meth)acrylate, 2-hydroxyethyl (meth)acrylate, 2-hydroxypropyl (meth)acrylate; 2,3-dichloro-1,3-butadiene; 1-chloro-1,3-butadiene; butadiene; isoprene; ethylene; styrene; sulfur; and the like.

The chloroprene-based rubber according to one embodiment of the present invention can comprise 0 to 20% by mass of monomer units other than the chloroprene monomer and the unsaturated nitrile monomer, when the rubber is taken as 100% by mass. The content rate of monomer units other than the chloroprene monomer and the unsaturated nitrile monomer in the rubber is, for example, 0, 2, 4, 6, 8, 10, 12, 14, 16, 18, or 20% by mass, and may be within a range between any two of the numerical values exemplified here. By adjusting the copolymerization amount of monomers other than the chloroprene monomer and the unsaturated nitrile monomer within this range, the effects due to copolymerizing these monomers can be obtained without impairing the properties of the resulting rubber composition. Furthermore, the chloroprene-based rubber according to one embodiment of the present invention can also consist only of chloroprene monomer units and unsaturated nitrile monomer units, or can consist only of chloroprene monomer units.

The rubber composition according to the present invention can use the chloroprene-based rubber alone or in combination of two or more. When the rubber composition according to one embodiment of the present invention comprises two or more types of chloroprene-based rubbers, the total content rate of unsaturated nitrile monomer units contained in the two or more types of chloroprene-based rubbers included in the rubber composition is preferably 25% by mass or less.

The chloroprene-based polymer, such as a homopolymer of chloroprene, and a copolymer of chloroprene, contained in the chloroprene-based rubber according to the present invention may be a sulfur-modified chloroprene polymer, a mercaptan-modified chloroprene polymer, a xanthogen-modified chloroprene polymer, a dithiocarbonate-based chloroprene polymer, a trithiocarbonate-based chloroprene polymer, a carbamate-based chloroprene polymer, or the like.

The weight-average molecular weight (Mw), number-average molecular weight (Mn), and molecular weight distribution (polydispersity of molecular weight, Mw/Mn) of the chloroprene-based rubber may be in the following ranges from the viewpoint that excellent hardness, tensile strength, and cold resistance are easily obtained in good balance.

The weight-average molecular weight of the chloroprene-based rubber may be 10×10³ g/mol or more, 50×10³ g/mol or more, 100 × 10³ g/mol or more, 300 × 10³ g/mol or more, 400 × 10³ g/mol or more, or 450 × 10³ g/mol or more. The weight-average molecular weight of the chloroprene-based rubber may be 5000 × 10³ g/mol or less, 3000 × 10³ g/mol or less, 2000 × 10³ g/mol or less, 1000 × 10³ g/mol or less, 800 × 10³ g/mol or less, or 500 × 10³ g/mol or less. From these viewpoints, the weight-average molecular weight of the chloroprene-based rubber may be 10 × 10³ to 5000 × 10³ g/mol, 100 × 10³ to 2000 × 10³ g/mol, or 300 × 10³ to 1000 × 10³ g/mol.

The number-average molecular weight of the chloroprene-based rubber may be 1 × 10³ g/mol or more, 5 × 10³ g/mol or more, 10 × 10³ g/mol or more, 50 × 10³ g/mol or more, 100 × 10³ g/mol or more, or 130 × 10³ g/mol or more. The number-average molecular weight of the chloroprene-based rubber may be 1000 × 10³ g/mol or less, 800 × 10³ g/mol or less, 500 × 10³ g/mol or less, 300 × 10³ g/mol or less, 200 × 10³ g/mol or less, or 150 × 10³ g/mol or less. From these viewpoints, the number-average molecular weight of the chloroprene-based rubber may be 1 × 10³ to 1000 × 10³ g/mol, 10 × 10³ to 500 × 10³ g/mol, or 50 × 10³ to 300 × 10³ g/mol.

The molecular weight distribution of the chloroprene-based rubber may be 1.0 or more, 1.5 or more, 2.0 or more, 2.5 or more, 3.0 or more, 3.2 or more, or 3.4 or more. The molecular weight distribution of the chloroprene-based rubber may be 10 or less, 8.0 or less, 5.0 or less, 4.0 or less, 3.8 or less, 3.5 or less, or 3.4 or less. From these viewpoints, the molecular weight distribution of the chloroprene-based rubber may be 1.0 to 10, 2.0 to 5.0, or 2.5 to 4.0.

The weight-average molecular weight (Mw) and number-average molecular weight (Mn) of the chloroprene-based rubber can be obtained by measuring by gel permeation chromatography (GPC) and converting to polystyrene equivalent. Specifically, it can be measured by the method described in the Examples.

### 1.2 Method for Producing Chloroprene-based Rubber

The method for producing the chloroprene-based rubber according to the present invention is not particularly limited, but the chloroprene-based rubber can be obtained by a production method including an emulsion polymerization step of emulsion polymerizing a raw material monomer containing a chloroprene monomer. In the emulsion polymerization step according to one embodiment of the present invention, monomer comprising a chloroprene monomer, or a chloroprene monomer and an unsaturated nitrile monomer, is emulsion polymerized, appropriately using an emulsifier, a dispersant, a catalyst, a chain transfer agent, and the like, and when the target final conversion rate is reached, a polymerization terminator is added to stop the polymerization, whereby a latex containing a chloroprene-based polymer comprising chloroprene monomer units can be obtained. Next, removal of unreacted monomers from the polymerization liquid obtained by the emulsion polymerization step can be performed. The method is not particularly limited, and for example, a steam stripping method can be mentioned. Thereafter, by adjusting the pH and going through steps such as conventional freeze coagulation, water washing, and hot air drying, the chloroprene-based rubber comprising the chloroprene-based polymer can be obtained.

The polymerization initiator used in the emulsion polymerization is not particularly limited, and known polymerization initiators generally used for emulsion polymerization of chloroprene can be used. Examples of the polymerization initiator include potassium persulfate, ammonium persulfate, sodium persulfate, organic peroxides such as hydrogen peroxide, t-butyl hydroperoxide, and the like.

The emulsifier used in the emulsion polymerization is not particularly limited, and known emulsifiers generally used for emulsion polymerization of chloroprene can be used. Examples of the emulsifier include alkali metal salts of saturated or unsaturated fatty acids having 6 to 22 carbon atoms, alkali metal salts of rosin acid or disproportionated rosin acid (for example, potassium rosinate), alkali metal salts (for example, sodium salt) of formalin condensates of β-naphthalenesulfonic acid, and the like.

The molecular weight modifier used in the emulsion polymerization is not particularly limited, and known molecular weight modifiers generally used for emulsion polymerization of chloroprene can be used. Examples include mercaptan-based compounds, xanthogen-based compounds, dithiocarbonate-based compounds, trithiocarbonate-based compounds, and carbamate-based compounds. As the molecular weight modifier for the chloroprene-based rubber according to one embodiment of the present invention, xanthogen-based compounds, dithiocarbonate-based compounds, trithiocarbonate-based compounds, and carbamate-based compounds can be suitably used.

The polymerization temperature and the final conversion rate of the monomers are not particularly limited, but the polymerization temperature may be, for example, 0 to 50°C or 10 to 50°C. Polymerization may be carried out such that the final conversion rate of the monomers falls within the range of 40 to 95% by mass. To adjust the final conversion rate, polymerization may be stopped by adding a polymerization terminator that stops the polymerization reaction when the desired conversion rate is reached.

The polymerization terminator is not particularly limited, and known polymerization terminators generally used for emulsion polymerization of chloroprene can be used. Examples of the polymerization terminator include phenothiazine (thiodiphenylamine), 4-t-butylcatechol, 2,2-methylenebis-4-methyl-6-t-butylphenol, and the like.

The chloroprene-based rubber according to one embodiment of the present invention can be obtained, for example, after removing unreacted monomers by a steam stripping method, adjusting the pH of the latex, and then going through steps such as conventional freeze coagulation, water washing, and hot air drying.

Chloroprene-based rubbers are classified into mercaptan-modified type, xanthogen-modified type, sulfur-modified type, dithiocarbonate-based type, trithiocarbonate-based type, and carbamate-based type according to the type of molecular weight modifier.

### 1.3 3-Methyl-thiazolidine-2-thione, Compound A and Compound B

The rubber composition according to the present invention satisfies at least one of the following conditions i) and ii):
condition i)
   the rubber composition comprises 3-methyl-thiazolidine-2-thione, and the rubber composition comprises 0.1 to 3.0 parts by mass of 3-methyl-thiazolidine-2-thione with respect to 100 parts by mass of the chloroprene-based rubber;
condition ii)
   the rubber composition comprises a compound A and a compound B;
   the compound A is at least one selected from a group consisting of a thiourea-based compound, 3-methyl-thiazolidine-2-thione, and di(5-mercapto-1,3,4-thiadiazol-2-yl) disulfide;
   the compound B is at least one selected from a group consisting of a thiuram-based compound, a sulfenamide-based compound, a thiazole-based compound, a guanidine-based compound, a benzimidazole-based compound, N-phenyl-N-(trichloromethylthio)benzenesulfonamide, and a diazabicycloundecene-based compound; and
   the rubber composition comprises 0.1 to 3.0 parts by mass of the compound A and 0.01 to 3.0 parts by mass of the compound B with respect to 100 parts by mass of the chloroprene-based rubber.

Conventionally, in a rubber composition containing a chloroprene-based rubber, when silica as a filler and a vulcanization accelerator that supplies sulfur as a crosslinking agent were used in combination, vulcanization sometimes did not proceed sufficiently. Here, the reason why vulcanization does not proceed sufficiently when silica and a vulcanization accelerator are combined is presumed to be because the silica surface is covered with silanol groups and is acidic, and because the vulcanization accelerator is adsorbed onto the silica surface, thereby inhibiting vulcanization. As a result of diligent studies, the present inventors found that in a chloroprene-based rubber composition containing silica, by satisfying the above condition i) and/or ii), vulcanization can proceed sufficiently, leading to a rubber composition capable of providing a vulcanized product and a vulcanized molded body excellent in abrasion resistance, and completed the present invention. According to one embodiment of the present invention, since vulcanization proceeds sufficiently, a vulcanized product and a vulcanized molded body excellent in abrasion resistance, and also excellent in tensile properties such as tensile strength at break and elongation at break, and/or compression set resistance can be obtained. Furthermore, according to the present invention, by adjusting the type and amount of compounding ingredients of the rubber composition, particularly by adjusting the compounding amount of fillers such as silica, the hardness of the obtained vulcanized product and vulcanized molded body can be freely adjusted, and a vulcanized product and a vulcanized molded body having various hardnesses according to the application and use environment, and excellent in abrasion resistance, tensile properties and/or compression set resistance can be obtained. As one example, it is also possible to design a vulcanized product and a vulcanized molded body having relatively low hardness and excellent in abrasion resistance, tensile properties and/or compression set resistance.

When the rubber composition according to the present invention satisfies condition i), the rubber composition comprises 3-methyl-thiazolidine-2-thione, which is represented by the formula shown below. In this case, the rubber composition comprises 0.1 to 3.0 parts by mass of 3-methyl-thiazolidine-2-thione with respect to 100 parts by mass of the chloroprene-based rubber. The content rate of 3-methyl-thiazolidine-2-thione with respect to 100 parts by mass of the chloroprene-based rubber is, for example, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3.0 parts by mass, and may be within a range between any two of the numerical values exemplified here.

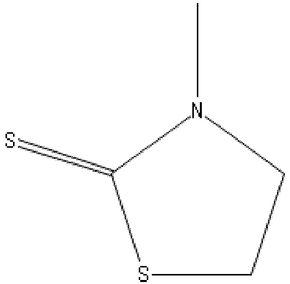

When the rubber composition comprises 3-methyl-thiazolidine-2-thione, the rubber composition does not need to comprise compound B described later, and for example, may comprise 3.0 parts by mass or less of compound B with respect to 100 parts by mass of the chloroprene-based rubber.

When the rubber composition according to the present invention satisfies condition ii), the rubber composition comprises a compound A and a compound B. Compound A is at least one selected from a group consisting of a thiourea-based compound, 3-methyl-thiazolidine-2-thione, and di(5-mercapto-1,3,4-thiadiazol-2-yl) disulfide.

Examples of the thiourea-based compound include a compound having a thiourea structure. Examples of the thiourea-based compound include compounds represented by the following formula.

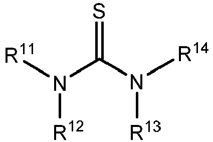

In the above formula, R¹¹ to R¹⁴ can each independently be hydrogen or an organic group, can be hydrogen or a hydrocarbon group. The hydrocarbon group can be an alkyl group or an aryl group. Examples of the thiourea-based compound include ethylene thiourea, diethyl thiourea (N,N'-diethylthiourea), trimethyl thiourea, diphenyl thiourea (N,N'-diphenylthiourea), 1,3-trimethylene-2-thiourea, and the like.

Di (5-mercapto-1,3,4-thiadiazol-2-yl) disulfide is represented by the following formula.

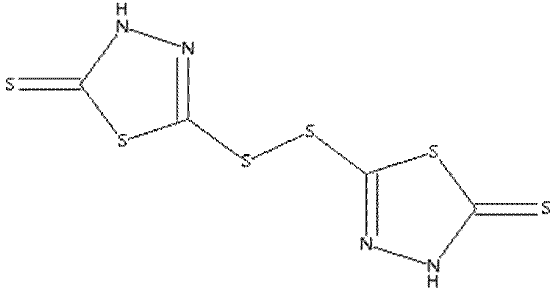

Compound B is at least one selected from a group consisting of a thiuram-based compound, a sulfenamide-based compound, a thiazole-based compound, a guanidine-based compound, a benzimidazole-based compound, N-phenyl-N-(trichloromethylthio)benzenesulfonamide, and a diazabicycloundecene-based compound, and it excludes the compounds listed as compound A. Compound B is preferably at least one selected from a group consisting of a thiuram-based compound, a thiazole-based compound, a guanidine-based compound, a benzimidazole-based compound, N-phenyl-N-(trichloromethylthio)benzenesulfonamide, and a diazabicycloundecene-based compound, and it excludes the compounds listed as compound A.

Examples of the thiuram-based compound include compounds comprising one or more structures represented by the following formula.

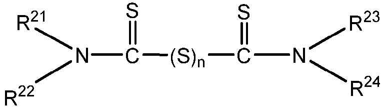

In the above formula, R²¹, R²², R²³, and R²⁴ can each independently be an organic group, and are preferably a hydrocarbon group. The hydrocarbon group can be an alkyl group having 1 to 12 carbon atoms or a cycloalkyl group having 1 to 12 carbon atoms. R²¹ and R²², and R²³ and R²⁴ may respectively link to form a cyclic structure (for example, a cycloalkyl group). "n" can be an integer of 1 or more, can be 1 to 4, is preferably 1 or 2, and more preferably 2. Examples of the thiuram-based compound include tetramethylthiuram disulfide (TMTD), tetraethylthiuram disulfide, tetrabutylthiuram disulfide, tetrakis(2-ethylhexyl)thiuram disulfide, tetramethylthiuram monosulfide, dipentamethylenethiuram tetrasulfide, and the like.

Examples of the sulfenamide-based compound include compounds having a sulfenamide structure. Examples of the sulfenamide-based compound include N-cyclohexyl-2-benzothiazolylsulfenamide, N-oxydiethylene-2-benzothiazolylsulfenamide, and the like. The sulfenamide-based compound may be a compound having a sulfenamide structure and a thiazole skeleton.

Examples of the thiazole-based compound include compounds having a thiazole skeleton, which excludes the compounds listed as compound A, and more preferably having a benzothiazole skeleton. Examples of the thiazole-based compound include 2-mercaptobenzothiazole, di-2-benzothiazolyldisulfide, zinc salt of 2-mercaptobenzothiazole, cyclohexylamine salt of 2-mercaptobenzothiazole, 2-(4'-morpholinodithio)benzothiazole, N-cyclohexylbenzothiazole-2-sulfenamide, N-cyclohexyl-2-benzothiazolylsulfenamide, N-oxydiethylene-2-benzothiazolylsulfenamide, and the like. The thiazole-based compound may be a compound having a thiazole skeleton and a sulfenamide structure.

Examples of the guanidine-based compound include compounds having a guanidine skeleton. Examples of the guanidine-based compound include 1,3-diphenylguanidine, 1,3-di-o-tolylguanidine, 1-o-tolylbiguanide, di-o-tolylguanidine salt of dicatechol borate, and the like.

Examples of the benzimidazole-based compound include compounds having a benzimidazole skeleton. Examples of the benzimidazole-based compound include 2-mercaptobenzimidazole, 2-mercaptomethylbenzimidazole, and zinc salt of 2-mercaptomethylbenzimidazole.

N-phenyl-N-(trichloromethylthio)benzenesulfonamide is represented by the following formula.

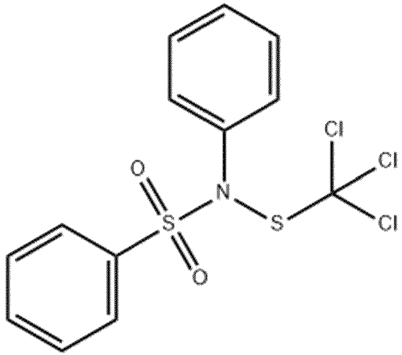

Examples of the diazabicycloundecene-based compound include compounds having a diazabicycloundecene skeleton. Examples of the diazabicycloundecene-based compound include 1,8-diazabicyclo [5.4.0] undecene-7.

The rubber composition comprises 0.1 to 3.0 parts by mass of the compound A with respect to 100 parts by mass of the chloroprene-based rubber. The content of compound A with respect to 100 parts by mass of the chloroprene-based rubber is, for example, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3.0 parts by mass, and may be within a range between any two of the numerical values exemplified here.

The rubber composition comprises 0.01 to 3.0 parts by mass of the compound B with respect to 100 parts by mass of the chloroprene-based rubber. The content of compound B with respect to 100 parts by mass of the chloroprene-based rubber is, for example, 0.01, 0.02, 0.03, 0.05, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3.0 parts by mass, and may be within a range between any two of the numerical values exemplified here.

When the rubber composition comprises the compound A and the compound B, the rubber composition preferably comprises 10 to 100 parts by mass of the compound B with respect to 100 parts by mass of the compound A. The content of compound B with respect to 100 parts by mass of compound A is, for example, 10, 20, 30, 40, 50, 60, 70, 80, 90, 100 parts by mass, and may be within a range between any two of the numerical values exemplified here.

As the compound A, the above-mentioned compounds can be used alone or in combination of two or more. Also, as the compound B, the above-mentioned compounds can be used alone or in combination of two or more. When the rubber composition comprises 3-methyl-thiazolidine-2-thione and the compound B, the content of 3-methyl-thiazolidine-2-thione is preferably 0.1 to 3.0 parts by mass, and the content of the compound B is preferably 0.1 to 3.0 parts by mass, with respect to 100 parts by mass of the chloroprene-based rubber. When the rubber composition comprises 3-methyl-thiazolidine-2-thione, a compound A other than 3-methyl-thiazolidine-2-thione, and the compound B, the total content of the compound A including 3-methyl-thiazolidine-2-thione is preferably 0.1 to 3.0 parts by mass, and the content of the compound B is more preferably 0.1 to 3.0 parts by mass, with respect to 100 parts by mass of the chloroprene-based rubber.

The rubber composition can also comprise a compound other than 3-methyl-thiazolidine-2-thione, the compound A, and the compound B, which can be used as a vulcanizing agent and/or a vulcanization accelerator for the chloroprene-based rubber. The content rate of the vulcanizing agent and vulcanization accelerator other than 3-methyl-thiazolidine-2-thione, the compound A, and the compound B with respect to 100 parts by mass of the chloroprene-based rubber can be, for example, 0.01, 0.02, 0.03, 0.05, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0 parts by mass, and may be within a range between any two of the numerical values exemplified here. The rubber composition according to one embodiment of the present invention may not contain vulcanizing agents and vulcanization accelerators other than 3-methyl-thiazolidine-2-thione, the compound A, and the compound B. Examples of vulcanizing agents and vulcanization accelerators other than 3-methyl-thiazolidine-2-thione, the compound A, and the compound B include sulfur, dithiocarbamate-based vulcanization accelerators, and xanthate-based vulcanization accelerators.

The rubber composition according to one embodiment of the present invention can also comprise an organic peroxide. When an organic peroxide is used, the content rate of the organic peroxide with respect to 100 parts by mass of the chloroprene-based rubber can be 3.0 parts by mass or less. The added amount of the organic peroxide is, for example, 0, 0.5, 1.0, 1.5, 2.0, 2.5, 3.0 parts by mass, and may be within a range between any two of the numerical values exemplified here. The rubber composition according to one embodiment of the present invention may not comprise an organic peroxide.

### 1.4 Silica

Silica is added to the rubber composition as a filler, and its type is not particularly limited. As the silica, for example, wet silica (hydrated silicic acid), dry silica (anhydrous silicic acid), colloidal silica can be used, and wet silica is preferable.

The silica preferably has a BET specific surface area of 50 to 300 m²/g from the viewpoint of processability and obtainable physical properties. The BET specific surface area is, for example, 50, 60, 70, 80, 90, 100, 110, 120, 130, 140, 150, 160, 170, 180, 190, 200, 210, 220, 230, 240, 250, 260, 270, 280, 290, or 300 m²/g, and may be within a range between any two of the numerical values exemplified here.

The added amount of silica is 5 to 80 parts by mass with respect to 100 parts by mass of the chloroprene-based rubber. The content of silica with respect to 100 parts by mass of the chloroprene-based rubber is, for example, 5, 10, 15, 20, 25, 30, 35, 40, 45, 50, 55, 60, 65, 70, 75, or 80 parts by mass, and may be within a range between any two of the numerical values exemplified here.

The rubber composition according to one embodiment of the present invention may contain a filler other than silica. Examples of the filler other than silica include furnace carbon blacks such as SAF, ISAF, HAF, EPC, XCF, FEF, GPF, HMF, SRF; modified carbon blacks such as hydrophilic carbon black; channel black; lamp black; thermal carbons such as FT, MT; acetylene black; Ketjen black; clay; talc; and calcium carbonate.

The rubber composition according to one embodiment of the present invention preferably comprises 50% by mass or more of silica when the total filler contained in the rubber composition is taken as 100% by mass. The content rate of silica when the total filler contained in the rubber composition is taken as 100% by mass is, for example, 50, 55, 60, 65, 70, 75, 80, 85, 90, 95, 100% by mass, and may be within a range between any two of the numerical values exemplified here. The rubber composition according to one embodiment of the present invention may not contain a filler other than silica.

### 1.5 Silane Coupling Agent

The rubber composition according to one embodiment of the present invention comprises a silane coupling agent. As the silane coupling agent in the rubber composition according to one embodiment of the present invention, there is no particular limitation, and commercially available ones used in rubber compositions can be used. Examples include vinyl-based coupling agents, epoxy-based coupling agents, styryl-based coupling agents, methacryl-based coupling agents, acryl-based coupling agents, amino-based coupling agents, polysulfide-based coupling agents, and mercapto-based coupling agents. The silane coupling agent preferably comprises a silane coupling agent having an amino group in its structure, that is, an amino-based coupling agent, from the viewpoint of good reactivity with the chloroprene-based rubber.

Specific examples of the silane coupling agent include 3-methacryloxypropyltrimethoxysilane, bis-(3-triethoxysilylpropyl)tetrasulfide, bis-(3-trimethoxysilylpropyl)tetrasulfide, bis-(3-methyldimethoxysilylpropyl)tetrasulfide, bis-(2-triethoxysilylethyl)tetrasulfide, bis-(3-triethoxysilylpropyl)disulfide, bis-(3-trimethoxysilylpropyl)disulfide, bis-(3-triethoxysilylpropyl)trisulfide, 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, 2-lauroylthioethyltrimethoxysilane, 3-mercaptopropyltrimethoxysilane, 3-mercaptopropyltriethoxysilane, 3-mercaptopropylmethyldimethoxysilane, 3-aminopropyltrimethoxysilane, 3-aminopropyltriethoxysilane, N-phenyl-3-aminopropyltrimethoxysilane, N-2-(aminoethyl)-3-aminopropylmethyldimethoxysilane, N-2-(aminoethyl)-3-aminopropyltrimethoxysilane, γ-glycidoxypropyltrimethoxysilane, γ-glycidoxypropylmethyldiethoxysilane, 3-trimethoxysilylpropyl-N,N-dimethylthiocarbamoyltetrasulfide, 3-trimethoxysilylpropylbenzothiazolyltetrasulfide, 3-trimethoxysilylpropylmethacryloylmonosulfide, methyltrimethoxysilane, methyltriethoxysilane, dimethyldiethoxysilane, dimethyldimethoxysilane, trimethylethoxysilane, trimethylmethoxysilane, isobutyltrimethoxysilane, n-decyltrimethoxysilane, phenyltrimethoxysilane, phenyltriethoxysilane, diphenyldimethoxysilane, diphenyldiethoxysilane, hexyltrimethoxysilane, octadecylmethyldimethoxysilane, octadecyltrimethoxysilane, methyltrichlorosilane, dimethyldichlorosilane, triphenylchlorosilane, heptadecafluorodecylmethyldichlorosilane, heptadecafluorodecyltrichlorosilane, triethylchlorosilane, and the like. Among these, 3-aminopropyltrimethoxysilane, 3-aminopropyltriethoxysilane, N-phenyl-3-aminopropyltrimethoxysilane, N-2-(aminoethyl)-3-aminopropylmethyldimethoxysilane, and N-2-(aminoethyl)-3-aminopropyltrimethoxysilane are preferable.

The rubber composition according to one embodiment of the present invention can comprise 0.5 to 15 parts by mass of the silane coupling agent with respect to 100 parts by mass of the silica contained in the rubber composition, for example, 0.5, 1, 2, 3, 4, 5, 6, 7, 8, 9, 10, 11, 12, 13, 14, or 15 parts by mass, and may be within a range between any two of the numerical values exemplified here. These can be used alone or in combination of two or more. By comprising the above silane coupling agent and setting the content rate of the silane coupling agent within the above numerical range, the dispersibility of the silica filler in the rubber and the reinforcing effect between the rubber and the silica filler are improved, and the occurrence of scorch can be suppressed.

### 1.6 Hydrate

The hydrate preferably has a structure such that H₂O is released, for example, during kneading operation and vulcanization. The hydrate is more preferably a hydrate that releases H₂O in a temperature range of 100°C to 250°C, and even more preferably a hydrate that releases H₂O in a temperature range of 100°C to 150°C. Hereby, the reaction between the silane coupling agent and silica is promoted, and good physical properties and vulcanization speed can be obtained.

The hydrate is not particularly limited, and commercially available ones used in rubber compositions can be used. For example, a hydrotalcite compound represented by the following general formula (1), a hydrous salt, and a metal hydroxide can be used.

[M²⁺₁₋ₓM³⁺ₓ(OH)₂]^{×+}[Aₙ-_{x/n}·mH₂O]^{×-} (1)

In the above formula (1):
M²⁺ represents at least one divalent metal ion selected from a group consisting of Mg²⁺, Zn²⁺, and the like;
M³⁺ represents at least one trivalent metal ion selected from a group consisting of Al³⁺,Fe³⁺, and the like;
Aⁿ⁻ represents at least one n-valent anion selected from a group consisting of CO3²⁻, Cl⁻, NO3⁻, and the like;
X represents a number satisfying 0 < X < = 0.33.

Examples of the hydrotalcite compound include Mg_{4.3}Al₂(OH)_{12.6}CO₃·3.5H₂O, Mg₃ZnAl₂(OH)₁₂CO₃ · 3H₂O, Mg_{4.5}Al₂(OH)₁₃CO₃ · 3.5H₂O, Mg_{4.5}Al₂(OH)₁₃CO₃, Mg₄Al₂(OH)₁₂CO₃ · 3.5H₂O, Mg₆Al₂(OH)₁₆CO₃ · 4H₂O, Mg₅Al₂(OH)₁₄CO₃ · 4H₂O, Mg₃Al₂(OH)₁₀CO₃·1.7H₂O, and the like. Particularly preferable are Mg_{4.3}Al₂(OH)_{12.6}CO_{3·} 3.5H₂O, Mg₃ZnAl₂(OH)₁₂CO₃·3H₂O.

Examples of the hydrous salt include Al₂O_{3·}3H₂O,AbO3·H₂O, Na₂SO₄·10H₂O, CaSO₄·2H₂O_{,}NaHCO₃·Na₂CO₃·2H₂O,MgSO₄·7H₂O, and the like. Particularly preferable is Al₂O₃·3H₂O.

Examples of the metal hydroxide include Ca(OH)₂, Al(OH)₃, Mg(OH)₂, Zn(OH)₂, and the like. Particularly preferable is Mg(OH)₂.

The content of the hydrate is 0.5 parts by mass or more and less than 20 parts by mass, preferably 1 part by mass or more and less than 20 parts by mass, and more preferably 4 to 10 parts by mass, with respect to 100 parts by mass of the chloroprene-based rubber. The added amount of the hydrate can be, for example, 0.5, 1, 2, 3, 4, 5, 6, 7, 8, 9, 10, 11, 12, 13, 14, 15, 16, 17, 18, 19 parts by mass, or less than 20 parts by mass, and may be within a range between any two of the numerical values exemplified here. By using the hydrate in this range, the rubber composition excellent in abrasion resistance can be obtained.

### 1.7 Acid Acceptor

The rubber composition according to one embodiment of the present invention can comprise an acid acceptor. Examples of the acid acceptor include metal oxides. Examples of the metal oxide include zinc oxide, magnesium oxide, lead oxide, trilead tetraoxide, iron trioxide, titanium dioxide, calcium oxide, and the like. The metal oxide preferably comprises zinc oxide, and more preferably is zinc oxide.

### 1.8 Plasticizer

The plasticizer is not particularly limited as long as it is a plasticizer compatible with the chloroprene-based rubber. Examples include vegetable oils such as rapeseed oil, phthalate-based plasticizers, DOS (dioctyl sebacate), DBS (dibutyl sebacate), DOA (dioctyl adipate), ester-based plasticizers, ether-ester-based plasticizers, thioether-based plasticizers, aromatic oils, naphthenic oils, and the like. These can be used alone or in combination of two or more. The added amount of the plasticizer can be 0 to 50 parts by mass with respect to 100 parts by mass of the chloroprene-based rubber contained in the rubber composition. It can be, for example, 0, 5, 10, 15, 20, 25, 30, 35, 40, 45, or 50 parts by mass, and may be within a range between any two of the numerical values exemplified here.

### 1.9 Lubricant, Processing Aid

The rubber composition according to the present invention can further comprise a lubricant and/or a processing aid. The lubricant and processing aid are mainly added to improve processability, such as making the rubber composition easily releasable from rolls, molds, extruder screws, and the like. Examples of the lubricant and processing aid include fatty acids such as stearic acid, paraffin-based processing aids such as polyethylene, fatty acid amides, petrolatum, factice, and the like. These can be used alone or in combination of two or more. The rubber composition according to the present invention can comprise 1 to 15 parts by mass, or can comprise 1 to 10 parts by mass, of the lubricant and processing aid with respect to 100 parts by mass of the chloroprene-based rubber contained in the rubber composition. The content of the lubricant/processing aid is, for example, 1, 2, 3, 4, 5, 6, 7, 8, 9, 10, 11, 12, 13, 14, or 15 parts by mass, and may be within a range between any two of the numerical values exemplified here.

### 1.10 Others

The rubber composition according to the present invention can further comprise, in addition to the components described above, components such as an anti-aging agent, an antioxidant, a flame retardant, a vulcanization retarder, and the like, to the extent that the effects of the present invention are not impaired. Examples of the anti-aging agent and antioxidant include ozone anti-aging agents, phenolic anti-aging agents, amine-based anti-aging agents, acrylate-based anti-aging agents, waxes, phosphorus-based anti-aging agents, and the like. Examples of the amine-based anti-aging agent include 4,4'-bis (α, α-dimethylbenzyl) diphenylamine. The rubber composition according to the present invention can comprise a total of 0.1 to 10 parts by mass of the anti-aging agent and antioxidant with respect to 100 parts by mass of the chloroprene-based rubber contained in the rubber composition.

### 2. Method for Producing Rubber Composition

The rubber composition according to one embodiment of the present invention can be obtained by kneading the chloroprene-based rubber and other necessary components at a temperature below the vulcanization temperature. Examples of the apparatus for kneading the components include kneading devices such as conventionally known mixers, Banbury mixers, kneader mixers, open rolls, and the like.

### 3. Properties of Rubber Composition

The rubber composition according to one embodiment of the present invention preferably has the following properties.

### <Hardness of Vulcanized Molded Body>

The rubber composition according to one embodiment of the present invention can be adjusted such that the durometer hardness type A defined in JIS K 6253 of the vulcanized molded body of the rubber composition is 30 to 90. The durometer hardness type A of the vulcanized molded body of the rubber composition is, for example, 30, 35, 40, 45, 50, 55, 60, 65, 70, 75, 80, 85, or 90, and may be within a range between any two of the numerical values exemplified here. The durometer hardness type A of the vulcanized molded body of the rubber composition can be controlled by adjusting the type and amount of compounding ingredients of the rubber composition, particularly the compounding amount of the filler (particularly silica). The durometer hardness type A of the vulcanized molded body of the rubber composition can be determined by the method described in the Examples. According to the present invention, even when the hardness is adjusted to be low, a vulcanized product and a vulcanized molded body excellent in abrasion resistance, tensile properties, and compression set resistance can be obtained.

### <Tensile Properties of Vulcanized Molded Body>

The rubber composition according to one embodiment of the present invention preferably has a tensile strength at break according to JIS K 6251 of the vulcanized molded body of the rubber composition of 16 MPa or more. The tensile strength at break of the vulcanized molded body of the rubber composition is, for example, 16, 18, 20, 22, 24, 26, 28, 30, 32, 34, 36, 38, or 40 MPa, and may be within a range between any two of the numerical values exemplified here. According to one embodiment of the present invention, even though it contains silica, vulcanization can proceed sufficiently, and a vulcanized product and a vulcanized molded body having sufficient tensile strength can be obtained.

The rubber composition according to one embodiment of the present invention can have an elongation at break according to JIS K 6251 of the vulcanized molded body of the rubber composition of 300 to 1200%. The elongation at break of the vulcanized molded body of the rubber composition is, for example, 300, 400, 500, 600, 700, 800, 900, 1000, 1100, or 1200%, and may be within a range between any two of the numerical values exemplified here. The tensile strength at break and elongation at break of the vulcanized molded body of the rubber composition can be determined by the method described in the Examples.

### <Compression Set Resistance>

The rubber composition according to one embodiment of the present invention can have a compression set of the vulcanized molded body of the rubber composition of 35% or less under test conditions of 70°C for 24 hours according to JIS K 6262:2013. The compression set is, for example, 0, 5, 10, 15, 20, 25, 30, or 35%, and may be within a range between any two of the numerical values exemplified here. The compression set of the vulcanized molded body of the rubber composition can be determined by the method described in the Examples.

### <Abrasion Resistance>

The rubber composition according to one embodiment of the present invention preferably has an abrasion volume ΔV by an Akron abrasion resistance test according to JIS K 6264-2:2019 (1000 rotations abrasion) of 50 mm³ or less. The abrasion volume ΔV is, for example, 0, 5, 10, 15, 20, 25, 30, 35, 40, 45, or 50 mm³, and may be within a range between any two of the numerical values exemplified here. The abrasion volume ΔV of the vulcanized molded body of the rubber composition can be determined by the method described in the Examples.

### 4. Unvulcanized Molded Body, Vulcanized Product and Vulcanized Molded Body

An unvulcanized molded body according to the present embodiment uses the rubber composition according to the present embodiment, and is a molded body (molded article) of the rubber composition (in an unvulcanized state) according to the present embodiment. A method for producing the unvulcanized molded body according to the present embodiment comprises a step of molding the rubber composition (in an unvulcanized state) according to the present embodiment. The unvulcanized molded body according to the present embodiment consists of the rubber composition (in an unvulcanized state) according to the present embodiment.

A vulcanized product according to the present embodiment is a vulcanized product of the rubber composition according to the present embodiment. A method for producing the vulcanized product according to the present embodiment comprises a step of vulcanizing the rubber composition according to the present embodiment.

A vulcanized molded body according to the present embodiment is a vulcanized molded body of the rubber composition according to the present embodiment. The vulcanized molded body according to the present embodiment uses the vulcanized product according to the present embodiment, and is a molded body (molded article) of the vulcanized product according to the present embodiment. The vulcanized molded body according to the present embodiment consists of the vulcanized product according to the present embodiment.

The vulcanized molded body according to the present embodiment can be obtained by molding the vulcanized product obtained by vulcanizing the rubber composition (in an unvulcanized state) according to the present embodiment, or can also be obtained by vulcanizing the molded body (in an unvulcanized state) obtained by molding the rubber composition according to the present embodiment. The vulcanized molded body according to the present embodiment can be obtained by vulcanizing the rubber composition according to the present embodiment after or during molding. A method for producing the vulcanized molded body according to the present embodiment comprises a step of molding the vulcanized product according to the present embodiment, or a step of vulcanizing the unvulcanized molded body according to the present embodiment.

The unvulcanized molded body, vulcanized product and vulcanized molded body according to the present embodiment can be used as rubber parts in various industrial fields such as buildings, structures, ships, railways, coal mines, automobiles, and the like. Since the rubber composition according to the present invention is excellent in abrasion resistance, it can be used as various members for which these properties are required. The rubber composition, vulcanized product and vulcanized molded body according to one embodiment of the present invention can be used as rubber parts in various industrial fields such as buildings, structures, ships, railways, coal mines, automobiles, and the like, and can be used for rubber parts such as automotive rubber members (for example, automotive sealing materials), hose materials, rubber molded articles, gaskets, rubber rolls, industrial cables, industrial conveyor belts, sponges, and the like. In particular, they can be used for members for which abrasion resistance is required. As one example, the vulcanized product and vulcanized molded body according to one embodiment of the present invention can be suitably used as rubber rolls. As one example, the vulcanized product and vulcanized molded body according to one embodiment of the present invention can be suitably used as rubber rolls for embossing, for which abrasion resistance is particularly required.

### (Automotive Rubber Members)

Automotive rubber members include gaskets, oil seals, packings, and the like, which are parts in machines and equipment that prevent leakage of liquids or gases and intrusion of dust, foreign matters such as rainwater and dirt into the interior. Specifically, there are gaskets used for fixed applications, and oil seals and packings used for moving parts and/or movable parts. For gaskets whose sealing part is fixed with bolts or the like, various materials according to the purpose are used for soft gaskets such as O-rings and rubber sheets. Packings are used for rotating parts such as shafts of pumps and motors, movable parts of valves, reciprocating parts such as pistons, connecting parts of couplers, water shutoff parts of water taps, and the like. The rubber composition of the present invention can enhance the abrasion resistance. This makes it possible to manufacture seals used under harsh environments, which was difficult with conventional rubber compositions.

### (Hose Materials)

Hose materials are flexible tubes, and specifically include hoses for water supply, oil supply, air supply, steam, hydraulic high or low pressure hoses, and the like. The rubber composition of the present invention can enhance the abrasion resistance of hose materials while maintaining the processability of the unvulcanized product. This makes it possible, for example, to manufacture hose materials used under harsh environments, which was difficult with conventional rubber compositions.

### (Rubber Molded Articles)

Rubber molded articles include anti-vibration rubbers, damping materials, boots, and the like. Anti-vibration rubbers and damping materials are rubbers that prevent the transmission and propagation of vibration. Specific examples include torsional dampers, engine mounts, muffler hangers, and the like, for absorbing vibration during engine operation for automobiles and various vehicles to prevent noise. The rubber composition of the present invention can enhance the abrasion resistance of anti-vibration rubbers and damping materials. This makes it possible to manufacture anti-vibration rubbers and damping materials that can be used even under harsh environments, which was difficult with conventional rubber compositions. Boots are bellows-shaped members whose outer diameter gradually increases from one end to the other. Specific examples include boots for constant velocity joint covers for protecting drive parts such as automobile drive systems, boots for ball joint covers (dust cover boots), boots for rack and pinion gears, and the like. The rubber composition of the present invention can enhance abrasion resistance. This makes it possible to manufacture boots used under harsher environments than conventional rubber compositions.

### (Gaskets, and the Like)

Gaskets, oil seals, and packings are parts in machines and equipment that prevent leakage of liquids or gases and intrusion of dust, foreign matter such as rainwater and dirt into the interior. Specifically, there are gaskets used for fixed applications, and oil seals and packings used for moving parts/movable parts. For gaskets whose sealing part is fixed with bolts or the like, various materials according to the purpose are used for soft gaskets such as O-rings and rubber sheets. Packings are used for rotating parts such as shafts of pumps and motors, movable parts of valves, reciprocating parts such as pistons, connecting parts of couplers, water shutoff parts of water taps, and the like. The rubber composition of the present invention can enhance the abrasion resistance of these members. This makes it possible to manufacture seals that can be used even under harsh environments, which was difficult with conventional rubber compositions.

### (Rubber Rolls)

Rubber rolls are manufactured by adhesively coating a metal core such as an iron core with rubber, and are generally manufactured by winding a rubber sheet spirally around a metal iron core. For rubber rolls, rubber materials such as NBR, EPDM, CR, and the like are used according to the required properties for various applications such as papermaking, various metal manufacturing, film manufacturing, printing, general industrial use, agricultural equipment such as hulling, food processing, and the like. CR is used in a wide range of rubber roll applications because it has good mechanical strength capable of withstanding friction with conveyed objects. Furthermore, rubber rolls that convey heavy objects have the problem of deformation due to load, and improvement is required. The rubber composition of the present invention can enhance the abrasion resistance of rubber rolls. This makes it possible to manufacture rubber rolls for embossing excellent in abrasion resistance, which was difficult with conventional rubber compositions.

### (Industrial Cables)

Industrial cables are linear members for transmitting electricity or optical signals. They are manufactured by coating a good conductor such as copper or copper alloy, or an optical fiber, with an insulating coating layer, and various industrial cables are manufactured depending on their structure and installation location. The rubber composition of the present invention can enhance the abrasion resistance of industrial cables. This makes it possible to manufacture industrial cables that can be used even under harsh environments, which was difficult with conventional rubber compositions.

### (Industrial Conveyor Belts)

Industrial conveyor belts include belts made of rubber, resin, or metal, and are selected according to a wide variety of usage methods. Among these, rubber conveyor belts are inexpensive and widely used, but especially when used in environments with frequent friction or collision with conveyed materials, damage due to deterioration occurred. The rubber composition of the present invention can enhance the abrasion resistance of industrial conveyor belts. This makes it possible to manufacture industrial conveyor belts used under harsh environments, which was difficult with conventional rubber compositions.

### (Sponges)

Sponges are porous materials with countless fine pores inside. Specifically, they are used for anti-vibration members, sponge seal parts, wetsuits, shoes, and the like. The rubber composition of the present invention can enhance the acid resistance and water resistance of sponges. Furthermore, since chloroprene-based rubber is used, it is also possible to enhance the flame retardancy of the sponge. This makes it possible to manufacture sponges used under harsh environments, which was difficult with conventional rubber compositions, or sponges excellent in flame retardancy. Furthermore, the hardness of the sponge obtained can also be appropriately adjusted by adjusting the content of the foaming agent, and the like.

Examples of the method for molding the rubber composition (in an unvulcanized state) and the vulcanized product according to the present embodiment include press molding, extrusion molding, calender molding, and the like. The temperature for vulcanizing the rubber composition may be appropriately set according to the composition of the rubber composition, and may be 140 to 220°C, or 160 to 190°C. The vulcanization time for vulcanizing the rubber composition may be appropriately set according to the composition of the rubber composition, the shape of the unvulcanized molded body, and the like.

### <Second Aspect>

### 1. Rubber Composition

A rubber composition according to one embodiment of the present invention is a rubber composition comprising a chloroprene-based rubber, silica, a silane coupling agent, and a hydrate, wherein when the rubber composition is press-vulcanized under conditions of 160°C for 40 minutes to obtain a vulcanized molded body, an abrasion volume ΔV of the vulcanized molded body in an Akron abrasion resistance test according to JIS K 6264-2 at 1000 rotations is 50 mm³ or less. According to the rubber composition related to the second aspect, in a rubber composition comprising a chloroprene-based rubber, silica, a silane coupling agent, and a hydrate, by adjusting such that the abrasion volume ΔV of the vulcanized molded body of the rubber composition is 50 mm³ or less, it becomes a rubber composition capable of providing a vulcanized molded body excellent in abrasion resistance, tensile properties, and compression set resistance.

Hereinafter, explanations will focus on the differences from the first aspect.

Regarding 1.1 Chloroprene-based Rubber and 1.2 Method for Producing Chloroprene-based Rubber, they are the same as in the first aspect.

### 1.3 3-Methyl-thiazolidine-2-thione, Compound A and Compound B

The rubber composition according to the second aspect can comprise at least one of 3-methyl-thiazolidine-2-thione, a compound A, and a compound B. The compound A is at least one selected from a group consisting of a thiourea-based compound, 3-methyl-thiazolidine-2-thione, and di(5-mercapto-1,3,4-thiadiazol-2-yl) disulfide, and the compound B is at least one selected from a group consisting of a thiuram-based compound, a sulfenamide-based compound, a thiazole-based compound, a guanidine-based compound, a benzimidazole-based compound, N-phenyl-N-(trichloromethylthio)benzenesulfonamide, and a diazabicycloundecene-based compound. In a chloroprene-based rubber composition containing silica, by compounding the above compounds, vulcanization can proceed more sufficiently, leading to a rubber composition capable of providing a vulcanized product and a vulcanized molded body excellent in abrasion resistance.

The rubber composition according to the second aspect can have a total content of 3-methyl-thiazolidine-2-thione, the compound A, and the compound B of 0.1 to 3.0 parts by mass with respect to 100 parts by mass of the chloroprene-based rubber. The total content of 3-methyl-thiazolidine-2-thione, the compound A, and the compound B with respect to 100 parts by mass of the chloroprene-based rubber is, specifically for example, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3.0 parts by mass, and may be within a range between any two of the numerical values exemplified here.

The content of 3-methyl-thiazolidine-2-thione in the rubber composition according to the second aspect with respect to 100 parts by mass of the chloroprene-based rubber can be 0 to 3.0 parts by mass. Specifically, for example, 0.0, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3.0 parts by mass, and may be within a range between any two of the numerical values exemplified here.

The content of compound A in the rubber composition according to the second aspect with respect to 100 parts by mass of the chloroprene-based rubber can be 0 to 3.0 parts by mass. Specifically, for example, 0.0, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3.0 parts by mass, and may be within a range between any two of the numerical values exemplified here.

The content of compound B in the rubber composition according to the second aspect with respect to 100 parts by mass of the chloroprene-based rubber can be 0 to 3.0 parts by mass. Specifically, it can be for example, 0.0, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3.0 parts by mass, and may be within a range between any two of the numerical values exemplified here.

Specific examples of 3-methyl-thiazolidine-2-thione, the compound A, and the compound B are the same as in the first aspect.

The rubber composition according to the second aspect more preferably satisfies at least one of the following conditions i) and ii):
condition i)
   the rubber composition comprises 3-methyl-thiazolidine-2-thione, and the rubber composition comprises 0.1 to 3.0 parts by mass of the 3-methyl-thiazolidine-2-thione with respect to 100 parts by mass of the chloroprene-based rubber;
condition ii)
   the rubber composition comprises a compound A and a compound B;
   the compound A is at least one selected from a group consisting of a thiourea-based compound, 3-methyl-thiazolidine-2-thione, and di(5-mercapto-1,3,4-thiadiazol-2-yl) disulfide;
   the compound B is at least one selected from a group consisting of a thiuram-based compound, a sulfenamide-based compound, a thiazole-based compound, a guanidine-based compound, a benzimidazole-based compound, N-phenyl-N-(trichloromethylthio) benzenesulfonamide, and a diazabicycloundecene-based compound; and
   the rubber composition comprises 0.1 to 3.0 parts by mass of the compound A and 0.01 to 3.0 parts by mass of the compound B with respect to 100 parts by mass of the chloroprene-based rubber.

Regarding conditions i) and/or ii), they are the same as in the first aspect.

Regarding 1.4 Silica, 1.5 Silane Coupling Agent, 1.6 Hydrate, 1.7 Acid Acceptor, 1.8 Plasticizer, 1.9 Lubricant, Processing Aid, 1.10 Other Components, and 2. Method for Producing Rubber Composition, they are the same as in the first aspect.

### 3. Properties of Rubber Composition

### <Abrasion Resistance>

When the rubber composition according to the second aspect is press-vulcanized under conditions of 160°C for 40 minutes to obtain a vulcanized molded body, an abrasion volume ΔV of the vulcanized molded body in an Akron abrasion resistance test according to JIS K 6264-2 at 1000 rotations is 50 mm³ or less.

The abrasion volume ΔV is, for example, 0, 5, 10, 15, 20, 25, 30, 35, 40, 45, or 50 mm³, and may be within a range between any two of the numerical values exemplified here. The abrasion volume ΔV of the vulcanized molded body of the rubber composition can be determined by the method described in the Examples. According to the rubber composition related to the second aspect, in a rubber composition comprising a chloroprene-based rubber, silica, a silane coupling agent, and a hydrate, by adjusting the abrasion volume ΔV of the vulcanized molded body of the rubber composition to 50 mm³ or less, it becomes a rubber composition capable of providing a vulcanized molded body excellent in abrasion resistance, tensile properties, and compression set resistance. The abrasion volume ΔV of the vulcanized molded body of the rubber composition can be controlled by adjusting the type and amount of each component in the rubber composition.

### <Hardness of Vulcanized Molded Body>

When the rubber composition according to the second aspect is press-vulcanized under conditions of 160°C for 40 minutes to obtain a vulcanized molded body, the durometer hardness type A defined in JIS K 6253 of the vulcanized molded body of the rubber composition can be 30 to 90. The durometer hardness type A of the vulcanized molded body of the rubber composition is, for example, 30, 35, 40, 45, 50, 55, 60, 65, 70, 75, 80, 85, or 90, and may be within a range between any two of the numerical values exemplified here. The durometer hardness type A of the vulcanized molded body of the rubber composition can be controlled by adjusting the type and amount of compounding ingredients of the rubber composition, particularly the compounding amount of the filler (particularly silica). The durometer hardness type A of the vulcanized molded body of the rubber composition can be determined by the method described in the Examples. According to the present invention, even when the hardness is adjusted to be low, a vulcanized product and a vulcanized molded body excellent in abrasion resistance, tensile properties, and compression set resistance can be obtained. Furthermore, according to one embodiment of the present invention, by adjusting the type and amount of compounding ingredients of the rubber composition such that the hardness falls within the above numerical range, the type and amount of compounding of each component including silica, the silane coupling agent, and the hydrate are indirectly adjusted, and a vulcanized product and a vulcanized molded body having appropriate hardness and being more excellent in abrasion resistance, tensile properties, and compression set resistance can be obtained.

Regarding the tensile properties and compression set resistance of the vulcanized molded body of the rubber composition according to the second aspect, they are the same as in the first aspect.

Regarding 4. Unvulcanized Molded Body, Vulcanized Product and Vulcanized Molded Body, they are the same as in the first aspect.

### EXAMPLES

Hereinafter, the present invention will be described in more detail based on Examples, but the present invention is not construed as being limited thereto.

### <Production of Chloroprene-Acrylonitrile Copolymer Rubber>

Into a polymerization vessel with an internal volume of 3 liters equipped with a heating/cooling jacket and a stirrer, 24 parts by mass of chloroprene monomer, 24 parts by mass of acrylonitrile monomer, 0.5 parts by mass of diethylxanthogen disulfide, 200 parts by mass of pure water, 5.00 parts by mass of potassium rosinate (manufactured by Harima Chemicals Group, Inc.), 0.40 parts by mass of sodium hydroxide, and 2.0 parts by mass of sodium salt of β-naphthalenesulfonic acid formalin condensate (manufactured by Kao Corporation) were added. As a polymerization initiator, 0.1 parts by mass of potassium persulfate was added, and emulsion polymerization was performed at a polymerization temperature of 40°C under a nitrogen stream. Chloroprene monomer was added portionwise starting 20 seconds after the start of polymerization, the portionwise addition flow rate was adjusted with a solenoid valve based on the change in heat quantity of the refrigerant during the 10 seconds from the start of polymerization, and thereafter the flow rate was readjusted every 10 seconds continuously. When the polymerization rate based on the total amount of chloroprene monomer and acrylonitrile monomer reached 50%, 0.02 parts by mass of phenothiazine as a polymerization terminator was added to stop the polymerization. Thereafter, unreacted monomers in the reaction solution were removed under reduced pressure to obtain a chloroprene-acrylonitrile copolymer latex.

The above-mentioned polymerization rate [%] of the chloroprene-acrylonitrile copolymer latex was calculated from the dry mass when the chloroprene-acrylonitrile copolymer latex was air-dried. Specifically, it was calculated from the following formula (A). In the formula, "solid content concentration" is the concentration [% by mass] of the solid content obtained by heating 2 g of the sampled chloroprene-acrylonitrile copolymer latex at 130°C to remove volatile components such as solvent (water), volatile chemicals, raw materials, and the like. "Total charged amount" is the total amount [g] of raw materials, reagents, and solvent (water) charged into the polymerization vessel from the start of polymerization up to a certain time. "Evaporation residue" is the mass [g] of chemicals among the chemicals and raw materials charged from the start of polymerization up to a certain time, which remain as solid content together with the polymer without volatilizing under the condition of 130°C. "Charged amount of monomers" is the total amount [g] of monomers initially charged into the polymerization vessel and monomers added portionwise from the start of polymerization up to a certain time. "Monomers" here refer to the total amount of chloroprene and acrylonitrile. Polymerization rate = {[(Total charged amount × Solid content concentration/100) - Evaporation residue]/Charged amount of monomers} × 100 ... (A)

After adjusting the pH of the above-mentioned chloroprene-acrylonitrile copolymer latex to 7.0 using acetic acid or sodium hydroxide, the chloroprene-acrylonitrile copolymer latex was freeze-coagulated on a metal plate cooled to -20°C to break the emulsion, thereby obtaining a sheet. This sheet was washed with water and then dried at 130°C for 15 minutes to obtain a solid chloroprene-acrylonitrile copolymer rubber (chloroprene-acrylonitrile copolymer).

After a sample solution with a concentration of 0.1% by mass was prepared by adjusting the concentration of the above-mentioned chloroprene-acrylonitrile copolymer rubber with THF, the weight-average molecular weight (Mw), number-average molecular weight (Mn), and molecular weight distribution (Mw/Mn) (standard polystyrene equivalent) of the chloroprene-acrylonitrile copolymer rubber were measured using a high-speed GPC apparatus (TOSOH HLC-8320GPC: manufactured by Tosoh Corporation). At that time, TSK guard column HHR-H was used as a precolumn, three columns of HSKgel GMHHR-H were used as analytical columns, the sample was eluted at a sample pump pressure of 8.0 to 9.5 MPa, a flow rate of 1 mL/min, and 40°C, and detected with a differential refractometer.

The elution time and molecular weight were obtained using a calibration curve created by measuring a total of 9 standard polystyrene samples with known molecular weights listed below. Mw=8.42×106, 1.09×106, 7.06×105, 4.27×105, 1.90×105, 9.64×104, 3.79×104, 1.74×104, 2.63×103

The weight-average molecular weight (Mw) of the chloroprene-acrylonitrile copolymer rubber was 473×10³ g/mol, the number-average molecular weight (Mn) was 138×10³ g/mol, and the molecular weight distribution (Mw/Mn) was 3.4.

The content of acrylonitrile monomer units contained in the chloroprene-acrylonitrile copolymer rubber was calculated from the content of nitrogen atoms in the chloroprene-acrylonitrile copolymer rubber. Specifically, using an elemental analyzer (SUMIGRAPH 220F: manufactured by Sumika Chemical Analysis Service, Ltd.), the content of nitrogen atoms in 100 mg of the chloroprene-acrylonitrile copolymer rubber was measured, and the content of acrylonitrile monomer units was calculated. The content of acrylonitrile monomer units was 9.9% by mass.

The above-mentioned elemental analysis was performed as follows. The electric furnace temperature was set to a reaction furnace of 900°C, a reduction furnace of 600°C, a column temperature of 70°C, and a detector temperature of 100°C, oxygen gas as a combustion gas was flowed at 0.2 mL/min, and helium gas as a carrier gas was flowed at 80 mL/min. The calibration curve was created using aspartic acid with a known nitrogen content (10.52%) as a standard substance.

### <Preparation of Rubber Compositions>

Each component was mixed as described in Tables 1 to 3, and kneaded with an 8-inch open roll to obtain the rubber compositions of the Examples and Comparative Examples. For the rubber composition of Comparative Example 1, the viscosity of the compound became too high, heat generation during processing increased, and the crosslinking reaction proceeded, causing the rubber composition to harden. Also, for the rubber compositions of Comparative Examples 5 to 12, even when heated and molded, the vulcanization reaction did not proceed, and rubber elasticity was not exhibited.

Each component used to obtain the rubber compositions is as follows.

### (Chloroprene-based rubber)

Acrylonitrile-containing chloroprene rubber: The above-mentioned chloroprene-acrylonitrile copolymer rubber
Mercaptan-modified chloroprene rubber: "S-40V" manufactured by Denka Company Limited

### (Filler)

Silica Nipsil AQ: "Nipsil AQ" manufactured by Tosoh Silica Corporation (BET specific surface area 187 m²/g)
Silica Carplex 1120: "Carplex 1120", (BET specific surface area 120 m²/g, average particle diameter 12 µm)

### (Silane coupling agent)

Amino group-containing silane coupling agent: "KBM-573" manufactured by Shin-Etsu Chemical Co., Ltd., N-phenyl-3-aminopropyltrimethoxysilane 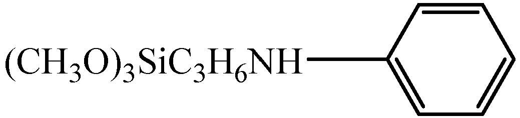
Silane coupling agent not containing amino group: "KBM-503" manufactured by Shin-Etsu Chemical Co., Ltd., 3-methacryloxypropyltrimethoxysilane

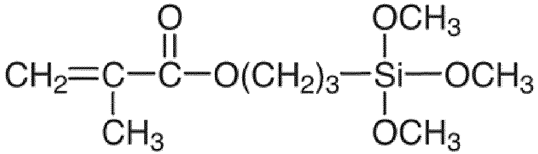

### (Compound A and 3-Methyl-thiazolidine-2-thione)

Thiourea-based compound Nocceler TMU: "Nocceler TMU" manufactured by Ouchi Shinko Chemical Industrial Co., Ltd., trimethylthiourea
Thiourea-based compound Accel 22S: "Accel 22S" manufactured by Kawaguchi Chemical Industry Co., LTD., ethylene thiourea
Di(5-mercapto-1,3,4-thiadiazol-2-yl) disulfide: "MIXLAND+ SD 75 GA F250" manufactured by MLPC International
3-Methyl-thiazolidine-2-thione: "RHENOGRAN MTT-80" manufactured by LANXESS

### (Compound B)

Thiuram-based compound Nocceler TT: "Nocceler TT" manufactured by Ouchi Shinko Chemical Industrial Co., Ltd., tetramethylthiuram disulfide
Sulfenamide-based compound Nocceler CZ: "Nocceler CZ" manufactured by Ouchi Shinko Chemical Industrial Co., Ltd., N-cyclohexyl-2-benzothiazolylsulfenamide
Thiazole-based compound Nocceler DM: "Nocceler DM" manufactured by Ouchi Shinko Chemical Industrial Co., Ltd., di-2-benzothiazolyldisulfide
Guanidine-based compound Nocceler DT: "Nocceler DT" manufactured by Ouchi Shinko Chemical Industrial Co., Ltd., 1,3-di-o-tolylguanidine
DBU (diazabicycloundecene)-based compound RHENOGRAN XLA-60: "RHENOGRAN XLA-60" manufactured by LANXESS, containing 60% by mass of a synthetic mixture of active amine (DBU) and a retarder
Benzimidazole-based compound Nocrac MB: "Nocrac MB" manufactured by Ouchi Shinko Chemical Industrial Co., Ltd., mercaptobenzimidazole
N-phenyl-N-(trichloromethylthio)benzenesulfonamide: "VULKALENT E/C" manufactured by LANXESS

### (Hydrate)

DHT-4A: "DHT-4A" manufactured by Kyowa Chemical Industry Co., Ltd., Mg_{4.3}Al₂(OH)_{12.6}CO₃·3.5H₂O
ZHT-4A: "ZHT-4A" manufactured by Kyowa Chemical Industry Co., Ltd., Mg₃ZnAl₂(OH)₁₂CO₃·3H₂O
Acid acceptor ZnO: "Zinc Oxide No. 2" manufactured by Sakai Chemical Industry Co., Ltd.
Plasticizer RS-700: "ADEKA SIZER RS-700" manufactured by ADEKA CORPORATION, polyether ester type
Lubricant Stearic acid: "Stearic Acid 50S" manufactured by New Japan Chemical Co., Ltd.
Anti-aging agent Nocrac CD: "Nocrac CD" manufactured by Ouchi Shinko Chemical Industrial Co., Ltd., 4,4'-bis(α,α-dimethylbenzyl)diphenylamine

### <Hardness (Type A Durometer)>

The obtained rubber composition was press-vulcanized under conditions of 160°C, for 40 minutes based on JIS K 6299 to prepare a sheet-shaped vulcanized molded body with a thickness of 2 mm. Using GS-610 (manufactured by TECLOCK Co., Ltd.), the durometer hardness type A defined in JIS K 6253 was measured for the obtained sheet-shaped vulcanized molded body. The results are shown in Tables 1 to 4.

### <Tensile Properties>

The obtained rubber composition was press-vulcanized under conditions of 160°C for 40 minutes based on JIS K 6299 to prepare a sheet-shaped vulcanized molded body with a thickness of 2 mm. Based on JIS K 6251, the above-mentioned sheet-shaped vulcanized molded body was formed into No. 3 dumbbell-shaped test pieces with a thickness of 2 mm, four test pieces were prepared, and using AGS-X manufactured by Shimadzu Corporation, the tensile strength at break and elongation at break of each test piece were measured at a tensile speed of 500 mm/min. The results are shown in Tables 1 to 4.

### <Compression Set Resistance>

For a cylindrical vulcanized molded body with a diameter of 29 mm and a height of 12.5 mm, obtained by press vulcanization under conditions of 160°C for 50 minutes, the compression set was measured under test conditions of 70°C for 24 hours based on JIS K 6262:2013. The results are shown in Tables 1 to 4.

### <Abrasion Resistance>

The obtained rubber composition was press-vulcanized under conditions of 160°C for 40 minutes to prepare a vulcanized molded body with a diameter of 63.6 mm, a thickness of 12.7 mm, and a center hole of 12.7 mm. For the obtained vulcanized molded body, an Akron abrasion resistance test (1000 rotations abrasion, abrasion volume ΔV, unit: mm³) was performed based on JIS K 6264-2:2019. The results are shown in Tables 1 to 4.

**[Table 2]**

| Table 1 | | | | Unit | Example | | | | | | | | | | |
|---|---|---|---|---|---|---|---|---|---|---|---|---|---|---|---|
| | | | | | 1 | 2 | 3 | 4 | 5 | 6 | 7 | 8 | 9 | 10 | 11 |
| Compounding | Chloroprene-based rubber | | Acrylonitrile-containing chloroprene rubber | parts by mass | 100 | 100 | 100 | 100 | 100 | 100 | 100 | 100 | 100 | 100 | 100 |
| | | | Mercaptan-modified chloroprene rubber | parts by mass | | | | | | | | | | | |
| | Filler | Silica | Nipsil AQ | parts by mass | 10 | 23 | 23 | 23 | 45 | 65 | | 23 | 23 | 23 | 23 |
| | | | Carplex 1120 | parts by mass | | | | | | | 30 | | | | |
| | Silane coupling agent | Amino group-containing silane coupling agent | KBM-573 | parts by mass | 0.7 | 1.5 | 1.5 | 1.5 | 3.0 | 4.5 | 1.5 | | 1.5 | 1.5 | 1.5 |
| | | Silane coupling agent not containing amino group | KBM-503 | parts by mass | | | | | | | | 1.5 | | | |
| | Compound A and 3-Methyl- thiazolidine- 2-thione | Thiourea-based compound | Nocceler TMU | parts by mass | 1.0 | 1.0 | 1.0 | 1.0 | 1.0 | 1.0 | 1.0 | 1.0 | | | |
| | | | Accel 22S | parts by mass | | | | | | | | | 1.0 | | |
| | | Di (5-mercapto-1, 3, 4-thiadiazol-2-yl) disulfide | MIXLAND + SD 75 GA F250 | parts by mass | | | | | | | | | | 1.0 | |
| | | 3-Methyl-thiazolidine-2-thione | Renogran MTT-80 | parts by mass | | | | | | | | | | | 2.0 |
| | Compound B | Thiuram-based compound | Nocceler TT | parts by mass | 0.5 | 0.2 | 0.5 | 0.8 | 0.5 | 0.5 | 0.5 | 0.5 | 0.5 | | |
| | | Sulfenamide-based compound | Nocceler CZ | parts by mass | | | | | | | | | | | |
| | | Thiazole-based compound | Nocceler DM | parts by mass | | | | | | | | | | | |
| | | Guanidine-based compound | Nocceler DT | parts by mass | | | | | | | | | | 0.5 | |
| | | DBU-based compound | Renoaran XLA-60 | parts by mass | | | | | | | | | | | |
| | | Benzimidazole-based compound | Nocrac MB | parts by mass | | | | | | | | | | | |
| | | N-phenyl-N-(trichloromethylthio) benzenesulfonamide | VULKALENT E/C | parts by mass | | | | | | | | | | | |
| | Hydrate | Hydrotalcite | DHT-4A | parts by mass | 6 | 6 | 6 | 6 | 6 | 6 | 6 | 6 | 6 | 6 | 6 |
| | | | ZHT-4A | parts by mass | | | | | | | | | | | |
| | Acid acceptor | | ZnO | parts by mass | 3 | 3 | 3 | 3 | 3 | 3 | 3 | 3 | 3 | 3 | 3 |
| | Plasticizer | | RS-700 | parts by mass | 5 | 5 | 5 | 5 | 5 | 5 | 5 | 5 | 5 | 5 | 5 |
| | Lubricant | | Stearic acid | parts by mass | 1 | 1 | 1 | 1 | 1 | 1 | 1 | 1 | 1 | 1 | 1 |
| | Anti-aging agent | | Nocrac CD | parts by mass | 3 | 3 | 3 | 3 | 3 | 3 | 3 | 3 | 3 | 3 | 3 |
| Evaluation | Hardness | | | | 42 | 50 | 49 | 49 | 67 | 79 | 50 | 49 | 50 | 48 | 53 |
| | Tensile Properties | | Tensile strength at break | MPa | 16.2 | 23.4 | 25.4 | 24.8 | 26.9 | 28.8 | 18.0 | 24.2 | 24.8 | 19.4 | 21.4 |
| | | | Elongation at break | % | 878 | 724 | 809 | 812 | 483 | 346 | 865 | 1032 | 795 | 978 | 682 |
| | Compression Set Resistance | | | % | 16 | 18 | 18 | 19 | 18 | 18 | 21 | 19 | 24 | 31 | 30 |
| | Abrasion Resistance | | | mm³ | 25 | 10 | 7 | 9 | 9 | 8 | 15 | 21 | 9 | 23 | 10 |

**[Table 2]**

| Table 2 | | | | Unit | Example | | | | | | | | | |
|---|---|---|---|---|---|---|---|---|---|---|---|---|---|---|
| | | | | | 12 | 13 | 14 | 15 | 16 | 17 | 18 | 19 | 20 | 21 |
| Compounding | Chloroprene-based rubber | | Acrylonitrile -containing chloroprene rubber | parts by mass | 100 | 100 | 100 | 100 | 100 | 100 | | 100 | 100 | 100 |
| | | | Mercaptan-modified chloroprene rubber | parts by mass | | | | | | | 100 | | | |
| | Filler | Silica | Nipsil AQ | parts by mass | 23 | 23 | 23 | 23 | 23 | 23 | 23 | 23 | 23 | 23 |
| | | | Carplex 1120 | parts by mass | | | | | | | | | | |
| | Silane coupling agent | Amino group-containing couplina agent | KBM-573 | parts by mass | 1.5 | 1.5 | 1.5 | 1.5 | 1.5 | 1.5 | 1.5 | 1.5 | 1.5 | 1.5 |
| | | silane Silane coupling agent not containina amino aroup | KBM-503 | parts by mass | | | | | | | | | | |
| | Compound A and 3-Methyl- thiazolidine- 2-thione | Thiourea-based compound | Nocceler TMU | parts by mass | 1.0 | 1.0 | 1.0 | 1.0 | 1.0 | 1.0 | 1.0 | 1.0 | 1.0 | 1.0 |
| | | | Accel 22S | parts by mass | | | | | | | | | | |
| | | Di(5-mercapto-1, 3, 4-thiadiazol-2-yl) disulfide | MIXLAND + SD 75 GA F250 | parts by mass | | | | | | | | | | |
| | | 3-Methyl-thiazolidine -2-thione | Renogran MTT-80 | parts by mass | | | | | | | | | | |
| | Compound B | Thiuram-based compound | Nocceler TT | parts by mass | | | | | | | 0.5 | 0.5 | 0.5 | 0.5 |
| | | Sulfenamide-based compound | Nocceler CZ | parts by mass | 0.5 | | | | | | | | | |
| | | Thiazole-based compound | Nocceler DM | parts by mass | | 0.5 | | | | | | | | |
| | | Guanidine-based compound | Nocceler DT | parts by mass | | | 0.5 | | | | | | | |
| | | DBU-based compound | Renogran XLA-60 | parts by mass | | | | 0.5 | | | | | | |
| | | Benzimidazole-based compound | Nocrac MB | parts by mass | | | | | 0.5 | | | | | |
| | | N-phenyl-N-(trichloromethylthio) benzenesulfonamide | VULKALENT E/C | parts by mass | | | | | | 0.5 | | | | |
| | Hydrate | Hydrotalcite | DHT-4A | parts by mass | 6 | 6 | 6 | 6 | 6 | 6 | 6 | 1 | 15 | |
| | | | ZHT-4A | parts by mass | | | | | | | | | | 6 |
| | Acid acceptor | | ZnO | parts by mass | 3 | 3 | 3 | 3 | 3 | 3 | 3 | 3 | 3 | 3 |
| | Plasticizer | | RS-700 | parts by mass | 5 | 5 | 5 | 5 | 5 | 5 | 5 | 5 | 5 | 5 |
| | Lubricant | | Stearic acid | parts by mass | 1 | 1 | 1 | 1 | 1 | 1 | 1 | 1 | 1 | 1 |
| | Anti-aaina aaent | | Nocrac CD | parts by mass | 3 | 3 | 3 | 3 | 3 | 3 | 3 | 3 | 3 | 3 |
| Evaluation | Hardness | | | | 50 | 48 | 51 | 52 | 52 | 51 | 51 | 48 | 52 | 50 |
| | Tensile Properties | | Tensile strength at break | MPa | 23.7 | 23.9 | 21.7 | 23.5 | 24.8 | 19.4 | 20.4 | 20.2 | 24.8 | 23.8 |
| | | | Elonaation at break | % | 797 | 869 | 742 | 788 | 911 | 714 | 599 | 958 | 744 | 775 |
| | Compression Set Resistance | | | % | 20 | 26 | 24 | 28 | 32 | 27 | 9 | 30 | 19 | 20 |
| | Abrasion Resistance | | | mm³ | 2 | 2 | 7 | 7 | 15 | 7 | 12 | 29 | 12 | 16 |

**[Table 3]**

| Table 3 | | | | Unit | Comparative Example | | | | | | |
|---|---|---|---|---|---|---|---|---|---|---|---|
| | | | | | 1 | 2 | 3 | 4 | 5 | 6 | 7 |
| Compounding | Chloroprene-based rubber | | Acrylonitrile -containing chloroprene rubber | parts by mass | 100 | 100 | 100 | 100 | 100 | 100 | 100 |
| | Filler | Silica | Nipsil AQ | parts by mass | 85 | | 23 | 23 | 23 | 23 | 23 |
| | | Carbon black | Seast 116 | parts by mass | | 30 | | | | | |
| | Silane coupling agent | Amino group-containing silane coupling agent | KBM-573 | parts by mass | 6 | | | 1.5 | 1.5 | 1.5 | 1.5 |
| | | Silane coupling agent not containing amino group | KBM-503 | parts by mass | | | | | | | |
| | Compound A | Thiourea-based compound | Nocceler TMU | parts by mass | 1.0 | 1.0 | 1.0 | 1.0 | 1.0 | | |
| | Compound B | Thiuram-based compound | Nocceler TT | parts by mass | 0.5 | 0.5 | 0.5 | 0.5 | | 0.5 | |
| | | Sulfenamide-based compound | Nocceler CZ | parts by mass | | | | | | | 0.5 |
| | | Thiazole-based compound | Nocceler DM | parts by mass | | | | | | | |
| | | Guanidine-based compound | Nocceler DT | parts by mass | | | | | | | |
| | | DBU-based compound | Renogran XLA-60 | parts by mass | | | | | | | |
| | | Benzimidazole-based compound | Nocrac MB | parts by mass | | | | | | | |
| | | N-phenyl-N-(trichloromethylthio) benzenesulfonamide | VULKALENT E/C | parts by mass | | | | | | | |
| | Organic peroxide | | Perbutyl P | parts by mass | | | | | | | |
| | Hydrate | Hydrotalcite | DHT-4A | parts by mass | 6 | 6 | 6 | | 6 | 6 | 6 |
| | Acid acceptor | | MgO | parts by mass | | | | 4 | | | |
| | Acid acceptor | | ZnO | parts by mass | 3 | 3 | 3 | 3 | 3 | 3 | 3 |
| | Plasticizer | | RS-700 | parts by mass | 5 | 20 | 5 | 5 | 5 | 5 | 5 |
| | Lubricant | | Stearic acid | parts by mass | 1 | 1 | 1 | 1 | 1 | 1 | 1 |
| | Anti-aging agent | | Nocrac CD | parts by mass | 3 | 3 | 3 | 3 | 3 | 3 | 3 |
| Evaluation | Hardness | | | | Not proc essa ble | 52 | 50 | 50 | Not moldable | | |
| | Tensile Properties | | Tensile strength at break | MPa | | 12.4 | 16.1 | 12.5 | | | |
| | | | Elongation at break | % | | 472 | 1089 | 1104 | | | |
| | Compression Set Resistance | | | % | | 13 | 38 | 30 | | | |
| | Abrasion Resistance | | | mm³ | | 119 | 94 | 89 | | | |

**[Table 4]**

| Table 4 | | | | Unit | Comparative Example | | | | | |
|---|---|---|---|---|---|---|---|---|---|---|
| | | | | | 8 | 9 | 10 | 11 | 12 | 13 |
| Compounding | Chloroprene-based rubber | | Acrylonitrile -containing chloroprene rubber | parts by mass | 100 | 100 | 100 | 100 | 100 | 100 |
| | Filler | Silica | Nipsil AQ | parts by mass | 23 | 23 | 23 | 23 | 23 | 10 |
| | | Carbon black | Seast 116 | parts by mass | | | | | | |
| | Silane coupling agent | Amino group-containing silane coupling agent | KBM-573 | parts by mass | 1.5 | 1.5 | 1.5 | 1.5 | 1.5 | |
| | | Silane coupling agent not containing amino group | KBM-503 | parts by mass | | | | | | 0.7 |
| | Compound A | Thiourea-based compound | Nocceler TMU | parts by mass | | | | | | |
| | Compound B | Thiuram-based compound | Nocceler TT | parts by mass | | | | | | |
| | | Sulfenamide-based compound | Nocceler CZ | parts by mass | | | | | | |
| | | Thiazole-based compound | Nocceler DM | parts by mass | 0.5 | | | | | |
| | | Guanidine-based compound | Nocceler DT | parts by mass | | 0.5 | | | | |
| | | DBU-based compound | Renogran XLA-60 | parts by mass | | | 0.5 | | | |
| | | Benzimidazole-based compound | Nocrac MB | parts by mass | | | | 0.5 | | |
| | | N-phenyl-N-(trichloromethylthio) benzenesulfonamide | VULKALENT E/C | parts by mass | | | | | 0.5 | |
| | Organic peroxide | | Perbutyl P | parts by mass | | | | | | 1 |
| | Hydrate | Hydrotalcite | DHT-4A | parts by mass | 6 | 6 | 6 | 6 | 6 | 6 |
| | Acid acceptor | | MgO | parts by mass | | | | | | |
| | Acid acceptor | | ZnO | parts by mass | 3 | 3 | 3 | 3 | 3 | 3 |
| | Plasticizer | | RS-700 | parts by mass | 5 | 5 | 5 | 5 | 5 | 5 |
| | Lubricant | | Stearic acid | parts by mass | 1 | 1 | 1 | 1 | 1 | 1 |
| | Anti-aging agent | | Nocrac CD | parts by mass | 3 | 3 | 3 | 3 | 3 | 3 |
| Evaluation | Hardness | | | | Not moldable | | | | | 51 |
| | Tensile Properties | | Tensile strength at break | MPa | | | | | | 15.8 |
| | | | Elongation at break | % | | | | | | 425 |
| | Compression Set Resistance | | | % | | | | | | 6 |
| | Abrasion Resistance | | | mm³ | | | | | | 101 |

## Claims

1. A rubber composition comprising a chloroprene-based rubber, silica, a silane coupling agent, and a hydrate,
wherein:
the rubber composition comprises 5 to 80 parts by mass of the silica and 0.5 parts by mass or more and less than 20 parts by mass of the hydrate, with respect to 100 parts by mass of the chloroprene-based rubber;
the rubber composition comprises 0.5 to 15 parts by mass of the silane coupling agent with respect to 100 parts by mass of the silica; and
the rubber composition satisfies at least one of the following conditions i) and ii):
condition i)
the rubber composition comprises 3-methyl-thiazolidine-2-thione, and the rubber composition comprises 0.1 to 3.0 parts by mass of 3-methyl-thiazolidine-2-thione with respect to 100 parts by mass of the chloroprene-based rubber;
condition ii)
the rubber composition comprises a compound A and a compound B;
the compound A is at least one selected from a group consisting of a thiourea-based compound, 3-methyl-thiazolidine-2-thione, and di(5-mercapto-1,3,4-thiadiazol-2-yl) disulfide;
the compound B is at least one selected from a group consisting of a thiuram-based compound, a sulfenamide-based compound, a thiazole-based compound, a guanidine-based compound, a benzimidazole-based compound, N-phenyl-N-(trichloromethylthio)benzenesulfonamide, and a diazabicycloundecene-based compound; and
the rubber composition comprises 0.1 to 3.0 parts by mass of the compound A and 0.01 to 3.0 parts by mass of the compound B with respect to 100 parts by mass of the chloroprene-based rubber.

2. The rubber composition of Claim 1, wherein the chloroprene-based rubber contains an unsaturated nitrile monomer unit.

3. The rubber composition of Claim 1 or 2, wherein the silane coupling agent is a silane coupling agent having an amino group in its structure.

4. The rubber composition of Claim 1 or 2, wherein the hydrate is a hydrate that releases H₂O in a temperature range of 100°C to 250°C.

5. The rubber composition of Claim 1 or 2, wherein the hydrate is at least one selected from a group consisting of a hydrotalcite compound represented by a following formula (1), a hydrous salt, and a metal hydroxide;
[M²⁺₁₋ₓM³⁺ₓ(OH)₂]^{×+}[Aⁿ⁻_{x/n}·mH₂O]^{×-} (1)
wherein, in the formula (1), M²⁺ is at least one divalent metal ion selected from a group consisting of Mg²⁺, Mn²⁺, Fe²⁺, Co²⁺, Ni²⁺, Cu²⁺, Zn²⁺;
M³⁺ is at least one trivalent metal ion selected from a group consisting of Al³⁺, Fe³⁺, Cr³⁺, Co³⁺, In³⁺;
Aⁿ⁻ is at least one n-valent anion selected from a group consisting of OH⁻, F⁻, Cl⁻, Br⁻, NO3⁻, CO3²⁻, SO4²⁻, Fe(CN)6³⁻, CH₃COO⁻; and
X satisfies 0 < X ≤ 0.33.

6. The rubber composition of Claim 5, wherein the hydrate is at least one hydrotalcite compound selected from a group consisting of Mg_{4.3}Al₂(OH)_{12.6}CO₃·3.5H₂O, Mg₃ZnAl₂(OH)₁₂CO₃ · 3H₂O, Mg_{4.5}Al₂(OH)₁₃CO₃ · 3.5H₂O, Mg_{4.5}Al₂(OH)₁₃CO₃, Mg₄Al₂(OH)₁₂CO₃ · 3.5H₂O, Mg₆Al₂(OH)₁₆CO₃ · 4H₂O, Mg₅Al₂(OH)₁₄CO₃ · 4H₂O, Mg₃Al₂(OH)₁₀CO₃·1.7H₂O.

7. The rubber composition of Claim 1 or 2, wherein the silica has a BET specific surface area of 50 to 300 m²/g.

8. The rubber composition of Claim 1 or 2, wherein the rubber composition comprises the compound A and the compound B and the rubber composition comprises 10 to 100 parts by mass of the compound B with respect to 100 parts by mass of the compound A.

9. A rubber composition comprising a chloroprene-based rubber, silica, a silane coupling agent, and a hydrate, wherein when the rubber composition is press-vulcanized under conditions of 160°C for 40 minutes to obtain a vulcanized molded body, an abrasion volume ΔV of the vulcanized molded body in an Akron abrasion resistance test according to JIS K 6264-2 at 1000 rotations is 50 mm³ or less.

10. The rubber composition of Claim 9, wherein the vulcanized molded body has a durometer hardness type A defined in JIS K 6253 of 30 to 90.

11. The rubber composition of Claim 9 or 10, wherein the rubber composition comprises 5 to 80 parts by mass of the silica and 0.5 parts by mass or more and less than 20 parts by mass of the hydrate, with respect to 100 parts by mass of the chloroprene-based rubber and the rubber composition comprises 0.5 to 15 parts by mass of the silane coupling agent with respect to 100 parts by mass of the silica.

12. The rubber composition of Claim 9 or 10,
wherein the rubber composition comprises at least one of 3-methyl-thiazolidine-2-thione, a compound A, and a compound B;
the compound A is at least one selected from a group consisting of a thiourea-based compound, 3-methyl-thiazolidine-2-thione, and di(5-mercapto-1,3,4-thiadiazol-2-yl) disulfide; and
the compound B is at least one selected from a group consisting of a thiuram-based compound, a sulfenamide-based compound, a thiazole-based compound, a guanidine-based compound, a benzimidazole-based compound, N-phenyl-N-(trichloromethylthio) benzenesulfonamide, and a diazabicycloundecene-based compound.

13. A vulcanized product of the rubber composition of Claim 1 or 9.

14. A vulcanized molded body of the rubber composition of Claim 1 or 9.
